# EUROPEAN PATENT SPECIFICATION

(11) **EP 2 330 397 B1**
(45) Date of publication and mention of the grant of the patent: **21.02.2018**
(21) Application number: 09306176.0
(22) Date of filing: 03.12.2009
(51) Int. Cl.: G01M 3/16

(54) **Cable, module and installation for the detection and the localization of conductive liquid leaks.**
Kabel, Modul und Installation zur Erkennung und Lokalisierung von Lecks von leitenden Flüssigkeiten
Câble, module et installation pour la détection et la localisation de fuites de liquide conducteur

(43) Date of publication of application: 08.06.2011
(73) Proprietor: TTK, 75008 Paris (FR)
(72) Inventor: Dabetic, Sacha, 28410, SERVILLE (FR); Gautier, Olivier, 92200, NEUILLY SUR SEINE (FR); Gillot, Olivier, 92200, NEUILLY SUR SEINE (FR)
(74) Representative: Pontet Allano & Associes

(56) References cited:
- EP-A2- 0 306 239
- WO-A1-2006/086178
- DE-U1- 8 714 044
- FR-A1- 2 709 347
- GB-A- 2 275 555
- JP-A- 62 285 053
- US-A- 5 191 292
- US-A- 6 144 209

## Description

The present invention relates to the cable for the detection and the localization of conductive liquid leaks. It also relates to detection and localization modules implementing such cables and installations implementing such modules.

The field of the invention is the detection and the localization of conductive liquid leaks with detection cables.

Such detection cables are disclosed in prior art documents US 6 144 209 A, JP 62 285053 A and US 5 191 292 A. The detection and the localization of conductive fluid or liquid leaks is made with modules and installations implementing detection cables such as those described in French patent FR2709347. Known detection cables generally comprise a support core around which several wires are arranged helically. The support core comprises at its surface shapes adapted to receive each of these wires. Theses wires comprise at least one detection wire and an electrical ground wire.

In most cases the ground wire is a conductor arranged in a conductor or semiconductor envelop and the detection wire is a conductor arranged in a first conductor or semiconductor envelop itself arranged in a second envelop that is permeable and non conductor and lets an electrical contact with between the liquids but not with solid elements. In some cases, the detection wire consists in a conductor directly arranged in an envelop that is permeable and non conductor.

When a fluid leak occurs, the liquid penetrates in the second non conductor permeable envelop and establishes an electrical path between the ground wire and the detection wire and the fluid leak is detected.

A drawback of the known detection cables resides in the fact that when a liquid leak occurs, the permeable non conductive envelop is soaked with said liquid and is difficult to dry. Moreover such a drying requires time, drying means and maintenance.

It is an object of the present invention to provide a detection cable that is more efficient that known detection cables.

It is another object of the present invention to provide a detection cable that doesn't require drying after a liquid leak.

The invention is disclosed as recited in the appended claims.

Such objects are accomplished through a cable for the detection of liquid leaks said cable comprising:
- a detection wire comprising a conductor arranged in a non conductor envelope, and
- a non conductive support core comprising a shape adapted to receive said detection wire;
characterised in that:
- said conductor of said detection wire is arranged in an off-centered way in said non conductor envelope so that a part of the surface of said conductor is not covered by said non conductor envelope, and
- said detection wire is arranged in said shape on said support core in an orientation such as said non covered part of said conductor is disposed between said support core and said non conductor envelope in a liquid permeable way;
wherein when a liquid leak occurs, said liquid realizes an electrical path between said conductor and an electrical ground.

The architecture of the cable according to the invention, i.e. the orientation of the off-centred conductor of the detection wire in the shape on the support core, provides an electrical path only when a liquid penetrates in the small space between the detection wire and the support core. Any conductive contaminants such as dust, metal braids or simple wires, etc. are unable to touch the conductor of the detection wire.

The fluid leak detection cable doesn't implement a liquid permeable envelop that may soak with a liquid when a liquid leak occurs. Thus, the cable according to the invention doesn't present the drawback of the know detection cables.

In the present invention, when a liquid leak occurs, said liquid penetrates between the support core and the detection wire and constitutes an electrical path between the conductor of the detection cable and an electrical ground.

Unlike the detection cables of the prior art, there is no component in the cable according to the invention that needs any drying operation after a liquid leak.

The detection of the liquid is realised by monitoring, directly or indirectly, the electrical resistance between the detection wire and the electrical ground. When a liquid leak occurs, there is a decrease in the monitored electrical resistance. Such monitoring techniques are well known by a person having ordinary skills in the art. Such a detection technique if also described in the French patent FR 2826726. An example of such a detection will also be described below.

The importance of the monitored resistance decrease traduces the importance of the liquid leak.

The detection cable according to the present invention may also comprise a continuity wire for the detection wire, said continuity wire being:
- connected to the detection wire at said detection wire's far end, and
- intended to be connected to a detection unit at said detection wire's near end.
The continuity wire realizes electrical continuity for the detection wire the from the far end to the near end of the detection cable.

The detection cable according to the invention may also comprise an electrical ground wire comprising a conductor arranged in a conductor envelope, wherein when a liquid leak occurs, said liquid realizes an electrical path between the conductor of the detection wire and the electrical ground wire.

Such a ground wire is needed when there is no other electrical ground at location where said detection cable is used.

When the cable according to the invention comprises an electrical ground wire, the detection of the liquid leak is realized by monitoring the electrical resistance between the detection wire and the ground wire.

When the detection cable comprises an electrical ground wire, it may also comprise a continuity wire for the electrical ground wire, said ground continuity wire being:
- connected to the electrical ground wire at said electrical ground wire's far end, and
- intended to be connected to a detection unit at said electrical ground wire's near end.
The ground continuity wire realizes the continuity of the electrical ground from the far end to the near end of the detection cable and is useful for the detection of a break of the cable according to the present invention.

The invention also provides a cable for the detection and the localization of liquid leaks said cable comprising:
- a detection wire comprising a conductor arranged in a non conductor envelope;
- a continuity wire for said detection wire said continuity wire being:
   - connected to said detection wire at said detection wire's far end, and
   - intended to be connected to a detection unit at said detection wire's near end; and
- a non conductive support core comprising a shape adapted to receive said detection wire;
characterised in that:
- said conductor is arranged in an excentrated or off-centered way in said non conductor envelope so that a part of the surface of said conductor is not covered by said non conductor envelope, and
- said detection wire is arranged in said shape on said support core in an orientation such as said non covered part of said conductor is disposed between said support core and said non conductor envelope in a liquid permeable way;
wherein when a liquid leak occurs, said liquid realizes an electrical path between said conductor and an electrical ground.

Such a cable makes it possible on one hand the detection of a liquid leak and on the other hand the localisation of the liquid leak thanks to the continuity wire which realizes the electrical continuity from the far end of the cable to the near end of the cable.

Indeed, when a liquid leak occurs, said liquid realizes an electrical path between the detection wire and the electrical ground at the location of the liquid leak. This electrical path constitutes an electrical current leak at the location of the liquid leak, i.e. an electrical resistance. Knowing the total resistance represented by the detection wire with the continuity wire, the location of the liquid leak can then be determined by determining the electrical resistance represented by the portion of the detection wire which is between the near end of the detection wire and the location of the leak.

Such a localization technique is well known by a person having ordinary skills in the art and an example will be given below.

The detection and localization cable according to the invention may also comprise an electrical ground wire comprising a conductor arranged in a conductor envelope, wherein when a liquid leak occurs, said liquid realizes an electrical path between the conductor of the detection wire and the electrical ground wire.

Such a ground wire is needed when there is no other electrical ground at location where said detection cable is used.

When the detection and the localization cable according to the invention comprises a ground wire, it may also comprise a continuity wire for the electrical ground wire, said ground continuity wire being:
- connected to the electrical ground wire at said electrical ground wire's far end, and
- intended to be connected to a detection unit at said electrical ground wire's near end.
The continuity wire for the ground wire is also useful for the detection of a break in the cable according to the invention.

In a particular embodiment of the invention, the conductor of the detection wire is made of constantan, which has a resistivity of 10 Ohms/m. Moreover the constantan has a very low variation of resistivity between 0 to 100°C.

The continuity wires are made of copper.

According to the invention, the conductive envelope of the electrical ground wire comprise a conductive polymer. Such a conductive polymer provides conduction over the entire surface of the wire.

The conductive polymer may comprise any metal-powder loaded or carbon-black loaded polymers, such as PVC, PE, PVDF, PP, etc.

The invention also provides a module for the detection on of liquid leaks comprising:
- at least one detection cable according to the invention, and
- one detection unit for at least one detection cable.

The detection unit comprises the resistance monitoring means.

The invention also provides a module for the detection and the localization of liquid leaks comprising:
- at least one detection and localization cable according to the invention, and
- one detection and localization unit for at least one detection and localization cable.

The detection module and the detection and the localization modules may also comprise continuity means to hook up two cables according to the invention.

The invention also provides an installation for the detection of liquid leaks comprising:
- a support processing unit,
- a data transmission bus, and
- at least one detection module according to the invention.

The invention also provides an installation for the detection and the localization of liquid leaks comprising:
- a support processing unit,
- a data transmission bus, and
- at least one detection and localization module according to the invention.

According to the the installation the data transmission bus is arranged inside the non conductive support core of the detection cable or the detection and the localization cable.

The new and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
- figure 1 schematically illustrates a first example of a detection cable according to the invention;
- figure 2 schematically illustrates a first example of a detection and localization cable according to the invention;
- figure 3 schematically illustrates a preferred embodiment of a detection and the localization cable according to the invention;
- figure 4 schematically illustrates an example of a module according to the invention ;
- figure 5 schematically illustrates a detection and localization module according to the invention;
- figure 6 schematically illustrates a Wheatstone bridge implemented in the module of figure 5 for the detection and localization of a liquid leak; and
- figure 7 schematically illustrates an example of an installation according to the invention.

In the following specifications, elements common to several figures are referenced through a common identifier.

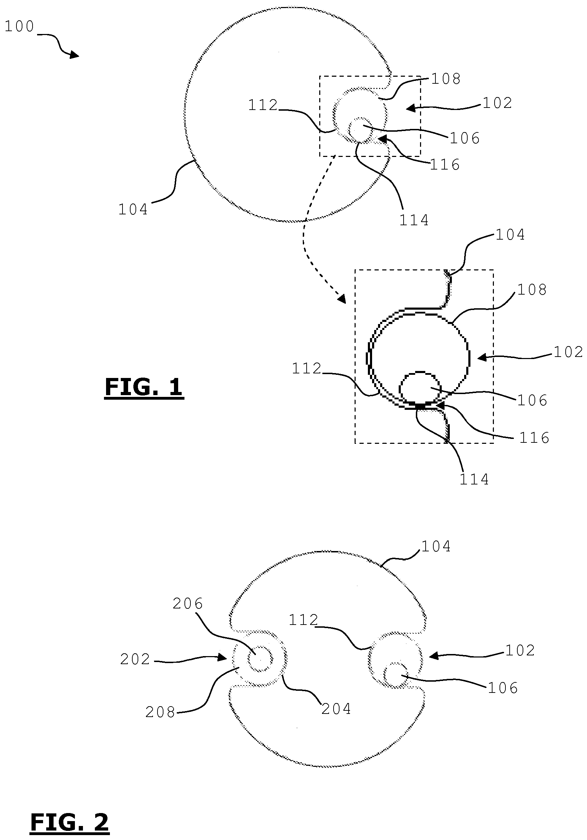

Figure 1 schematically illustrates a first example of a detection cable 100 according to the invention.

The detection cable 100 comprises a detection wire 102 and support core 104 which is insulated or non conductive.

The detection wire 102 comprises a conductor 106 which is arranged off-centered in a non conductive envelope 108 such as the non conductive envelop 108 doesn't cover the conductor over its entire perimeter, i.e. there is a part 110 of the surface of the conductor 106 which is not covered by the envelop 108.

The detection wire 102 is arranged in a shape 112 realized on the support core 104. The detection wire 102 is oriented in the shape 112, such as the part 110 of the conductor 106 which is not covered by the envelop 108 is disposed between the support core 104 end the envelop 108 in a liquid permeable way only.

The off-centered arrangement of the conductor 106 and the orientation of the detection wire 102 in the shape 112 provides an electrical path only when a liquid penetrates in the small space 114 between the core 104 and the detection wire 102. Any conductive contaminants such as dust, metal braids or wires are unable to touch the conductor 106.

Figure 2 schematically illustrates a second example of a detection cable 200 according to the invention.

The cable 200 represented en figure 2 comprises all the components of the detection wire 100 represented on figure 1.

The detection cable 200 also comprises an electrical ground wire 202 arranged in a shape 204 realized on the support core 104. The electrical ground wire comprises a conductor 206 arranged in a conductor envelop 208.

When a liquid leak occurs, the liquid realizes an electrical path between the detection wire 102 and the ground wire 202.

The detection wires of the figure 1 and figure 2 may also comprise continuity wires (non represented) for the detection wire 102 and the electrical ground wire 202.

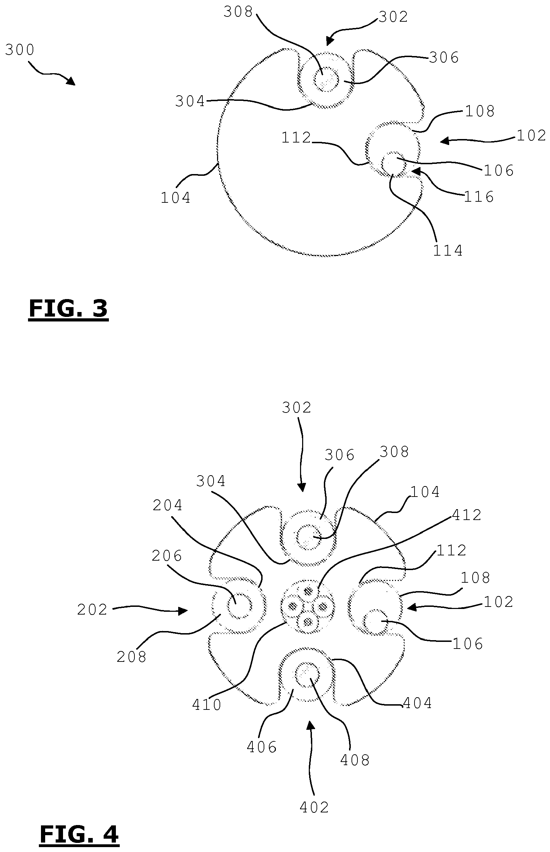

Figure 3 schematically illustrates a first example of a detection and localization cable 300 according to the invention.

The cable 300 comprises a detection wire 102 identical to the detection wire of the cables 100 and 200 represented in figures 1 and 2.

The localization cable 300 also comprises a electrical continuity wire 302 for the detection wire 102 arranged in a shape 304 realized on the support core 104. The electrical continuity wire comprises a conductor 306 arranged in a non conductor envelop 308.

The continuity wire 302 is connected to the detection wire at the far end of the cable 300 and is intended to be connected to a detection and localization unit at the cable's 300 near end.

The continuity wire 302 constitutes an electrical continuity for the detection wire 102 from the far end of the cable 300 to the near end of the cable 300.

The cable 300 may also be used only for the detection of the liquid leaks.

All the cables 100, 200 et 300 may also comprise a data transmission bus arranged at the center of the support core 104.

Figure 4 schematically illustrates a preferred embodiment of a detection and localization cable 400 according to the invention.

The cable 400 comprises a support core 104 on which are arranged :
- a detection wire 102 identical to the detection wire of the cables 100, 200 and 300 represented in figures 1 to 3,
- a continuity wire 302 for the detection wire 102 identical to the continuity wire of cable 300 represented on figure 3, and
- an electrical ground wire 202 identical to the electrical ground wire of cable 200 represented on figure 2,

The detection and the localization cable 400 also comprises a ground continuity wire 402 for the ground wire 202 arranged in a shape 404 realized on the support core 104. The ground continuity wire 402 comprises a conductor 306 arranged in a non conductor envelop 408.

The ground continuity wire 402 is connected to the ground wire 202 at the far end of the cable 400 and is intended to be connected to a detection and localization unit at the cable's 300 near end.

The ground continuity wire 402 constitutes a continuity of the electrical ground for the ground wire 202 from the far end of the cable 400 to the near end of the cable 400.

The detection and the localization cable 400 may also comprise a data transmission bus 410 arranged in the support core 104. The data transmission bus may comprise one or several communication wires 412.

The conductor 106 of the detection wire 102 (in all cables 100-400) is made of constantan.

The envelop 208 of the ground wire 202 (in all cables 200 and 400) is made of any convenient for extrusion and electrically insulating polymer material such as PE, PVC, PP, PVDF, ETFE, etc. Color, flame retardant or other additives may also be used.

In all the cables all the wires are winded around the support core 104.

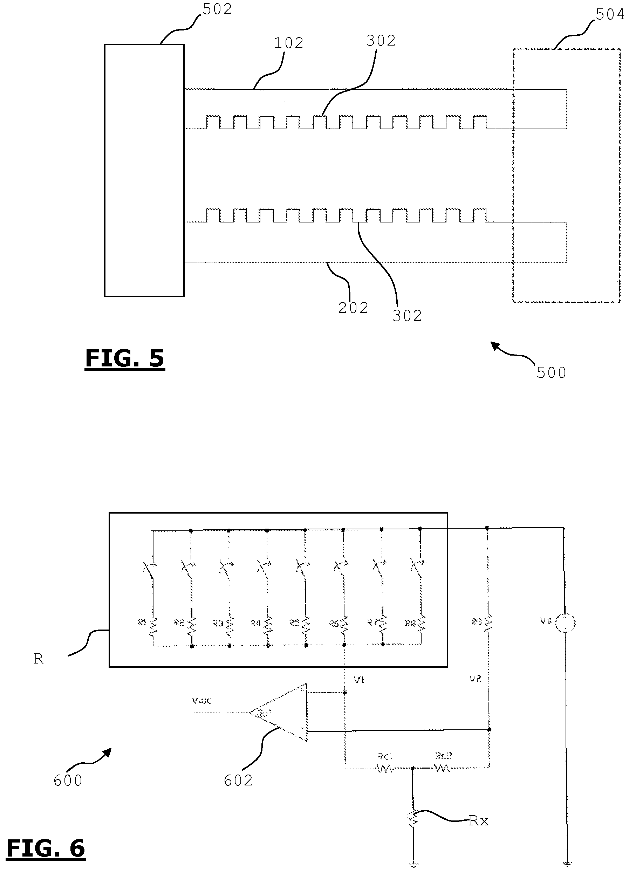

Figure 5 schematically illustrates an example of a detection and localization module implementing the detection and localization cable of figure 4.

The module 500 comprises the detection and localization cable 400, means for the detection and the localization 502.

The module 500 also comprises means 504 for hooking the detection and localization cable 400 to another similar or identical detection and localization cable.

The enunciation and the localisation of a liquid leak is realized by monitoring the electrical resistance between the detection wire and the electrical ground. There are two groups of methods for determining the electrical resistance - direct and indirect methods. The direct methods are a straight application of the Ohms' law *R*=*U*/*I* and needs to measure both the voltage V and the current *I*, or to know one of these values prior to the measurement and to measure the other in order to determine the resistance. The precision of these direct methods may be affected by the quality of the instruments.

The indirect methods (so-called comparative methods) are much simpler - it is only necessary to compare the value of the unknown resistance to another one, precise and with known value. The most common method is the Wheatstone bridge method as represented en figure 6.

On figure 6, the Wheatstone bridge 600 comprises a first variable resistance referenced R on the first branch of the bridge. Resistance R comprises several known resistances R1-R8 serially mounted. A switch is associated to each resistance R1 to R8 and the state of each switch is controlled digitally. The value of the resistance R is modified by modifying the state of a switch associated to one of the resistances R1 to R8.

The Wheatstone bridge 600 comprises a second known resistance R9 mounted on the second branch of the bridge.

The third branch of the Wheatstone bridge 600 is constituted by a resistance Rc1. The resistance Rc1 corresponds to the resistance of the detection wire between the near end of the cable and the location of the liquid leak. This resistance Rc1 is a linear function of the distance between the beginning of the sensing cable and the leak point.

The last branch of the Wheatstone bridge 600 is constituted by a resistance Rc2 which corresponds to the resistance of the rest of the detection cable and the continuity cable for the detection cable.

The sum of Rc1 and Rc2 is known and corresponds to the total resistance of the detection wire and the continuity wire.

Resistance Rx corresponds to the resistance caused by the liquid leak at the leak point.

The voltage V1 is the voltage measured between the variable resistance R and resistance Rc1 and voltage V2 is the voltage measured between the resistance R9 and resistance Rc2.

The bridge also comprises a voltage comparator 602, for example a galvanometer, which compares V1 to V2.

When there is no liquid leak, V1=V2 and the bridge 600 is balanced. The balanced bridge condition is **R9.Rc1=R.Rc2.**

We know that Rc1+Rc2 corresponds to the total resistance of the detection wire and the continuity wire, noted Rt. So Rc2=Rt-Rc1.

The balanced condition is then **R9.Rc1=R.(Rt-Rc1).**

When a liquid leak occurs the bridge is unbalanced. The state of the switches associated to resistances R1-R8 are then modified step by step to balance the bridge 600. The configuration of resistances R1-R8 that balances the gives value of Rc1. Knowing the value of Rc1 and the linear resistivity of the detection cable, the location of the leak point is determined.

Another method is to start with the configuration of resistances R1-R8 corresponding to the highest resistance for resistance R and to reduce the resistance R step by step of a value ΔR corresponding to a known length L of the detection value. When the bridge is balanced, the number of steps realised until the balance conditions is multiplied by the length L and the location of the leak is determined.

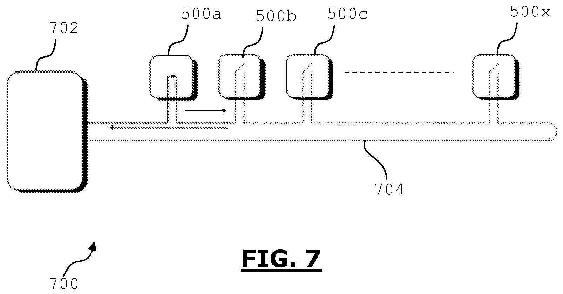

Figure 7 schematically illustrates an example of an installation 700 according to the invention.

The installation 700 comprises:
- a support processing unit 702,
- a data transmission bus 704, and
- several detection and localization modules 500a to 500x.

The detection and localization modules 500a to 500c are serially connected.

Each detection and localization module 500a-500x is interrogated one after the other. At first, the module 500a is interrogated. Then the module 500b is interrogated and so on.

Each interrogated module 500 informs the support processing unit 702 if a liquid leak is detected or not. If a liquid leak is detected the location of the leak is given to the support processing unit.

The invention is particularly adapted for the detection and the localization of leaks of water and other conductive liquids such as acids and bases.

While the invention has been particularly shown and described mainly with reference to a preferred embodiment, it will be understood that various changes in form and detail may be made therein without departing from the spirit, and scope of the invention.

## Claims

1. Cable (100-400) for the detection of conductive liquid leaks said cable comprising:
- a detection wire (102) comprising a conductor (106) arranged in a non conductor envelope (108), and
- a non conductive support core (104) comprising a shape (112) adapted to receive said detection wire (102);
**characterised in that**:
- said conductor (106) is arranged in an off-centered way in said non conductor envelope (108) so that a part (114) of the surface of said conductor (106) is not covered by said non conductor envelope (108), and
- said detection wire (102) is arranged in said shape (112) on said support core (104) in an orientation such as said non covered part (114) of said conductor (106) is disposed between said support core (104) and said non conductor envelope (108) in a liquid permeable way;
wherein when a liquid leak occurs, said liquid realizes an electrical path between said conductor (106) and an electrical ground.

2. Cable (300,400) according to claim 1, **characterized in that** it also comprises a continuity wire (302) for the detection wire (102), said continuity wire (302) being:
- connected to the detection wire (102) at said wire's far end, and
- intended to be connected to a detection unit at said detection wire's near end.

3. Cable (200,400) according to any of the preceding claims, **characterized in that** it also comprises an electrical ground wire (202) comprising a conductor (206) arranged in a conductor envelope (208), wherein when a liquid leak occurs, said liquid realizes an electrical path between the conductor (106) of the detection wire (102) and the electrical ground wire (202).

4. Cable (400) according to anyone of the preceding claims, **characterized in that** it also comprises a continuity wire (402) for the electrical ground wire (202), said ground continuity wire (402) being:
- connected to the electrical ground wire (202) at said electrical ground wire's far end, and
- intended to be connected to a detection unit at said electrical ground wire's near end.

5. Cable (300,400) for the detection and the localization of liquid leaks said cable comprising:
- a detection wire (102) comprising a conductor (106) arranged in a non conductor envelope (108);
- a continuity wire (302) for said detection wire (102) said continuity wire (302) being:
- connected to said detection wire (102) at said detection wire's far end, and
- intended to be connected to a detection unit at said detection wire's near end; and
- a non conductive support core (104) comprising a shape (112) adapted to receive said detection wire (102);
**characterised in that**:
- said conductor (106) is arranged in an off-centered way in said non conductor envelope (108) so that a part (114) of the surface of said conductor (106) is not covered by said non conductor envelope (108), and
- said detection wire (102) is arranged in said shape (112) on said support core (104) in an orientation such as said non covered part (114) of said conductor (106) is disposed between said support core (104) and said non conductor envelope (108) in a liquid permeable way;
wherein when a liquid leak occurs, said liquid realizes an electrical path between said conductor (106) and an electrical ground.

6. Cable (400) according to claim 5, **characterized in that** it also comprises an electrical ground wire (202) comprising a conductor (206) arranged in a conductor envelope (208), wherein when a liquid leak occurs, said liquid realizes an electrical path between the conductor (106) of the detection wire (102) and the electrical ground wire (202).

7. Cable (400) according to anyone of claims 5 or 6, **characterized in that** it also comprises a continuity wire (402) for the electrical ground wire (202), said ground continuity wire (402) being:
- connected to the electrical ground wire (202) at said electrical ground wire's far end, and
- intended to be connected to a detection unit at said electrical ground wire's near end.

8. Cable according to any of the preceding claims, **characterized in that** the conductor (106) of the detection wire (102) is made of constantan.

9. Cable according to anyone of the claims 3 or 6, **characterized in that** the conductive envelope (208) of the electrical ground wire (202) comprise a conductive polymer.

10. Module (500) for the detection on of liquid leaks comprising:
- at least one detection cable (100-400) according to anyone of the claims 1 to 4, 8 or 9, and
- one detection unit (502) for at least one detection cable (100-400).

11. Module 500 for the detection and the localization of liquid leaks comprising:
- at least one detection and localization cable (300,400) according to any of the claims 5 to 7, 8 or 9 and
- one detection and localization unit (502) for at least one detection and localization cable (300,400).

12. Installation (700) for the detection of liquid leaks comprising:
- a support processing unit (702),
- a data transmission bus (704), and
- at least one detection module (500) according to claim 10.

13. Installation (700) for the detection and the localization of liquid leaks comprising:
- a support processing unit (702),
- a data transmission bus (704), and
- at least one detection and localization module (500) according to claim 11.

14. Installation according to any of the claims 12 or 13, **characterized in that** the data transmission bus is arranged inside the non conductive support core (104) of the detection cable or the detection and the localization cable.

## Patentansprüche

1. Kabel (100-400) zur Detektion von Leckagen leitender Flüssigkeiten, wobei das Kabel umfasst:
- einen Detektionsdraht (102) mit einem Leiter (106), der in einer nichtleitenden Hülle (108) angeordnet ist, und
- einen nichtleitenden Stützkern (104), umfassend ein zur Aufnahme des Detektionsdrahts (102) ausgebildetes Formelement (112) ;
**dadurch gekennzeichnet, dass**
- der Leiter (106) exzentrisch in der nichtleitenden Hülle (108) angeordnet ist, so dass ein Teil (114) der Oberfläche des Leiters (106) nicht durch die nichtleitende Hülle (108) abgedeckt ist, und
- der Detektionsdraht (102) in dem Formelement (112) auf dem Stützkern (104) in einer solchen Ausrichtung angeordnet ist, dass der nicht abgedeckte Teil (114) des Leiters (106) flüssigkeitsdurchlässig zwischen dem Stützkern (104) und der nichtleitenden Hülle (108) angeordnet ist;
wobei bei Auftreten einer Flüssigkeitsleckage diese Flüssigkeit einen elektrischen Pfad zwischen dem Leiter (106) und einer elektrischer Masse herstellt.

2. Kabel (300, 400) gemäß Anspruch 1, **dadurch gekennzeichnet, dass** es ferner einen Kontinuitätsdraht (302) für den Detektionsdraht (102) umfasst, wobei der Kontinuitätsdraht (302)
- an dem entfernten Ende des Detektionsdrahts mit dem Detektionsdraht (102) verbunden ist, und
- zur Verbindung mit einer Detektionseinheit am nahen Ende des Detektionsdrahts vorgesehen ist.

3. Kabel (200, 400) gemäß einem der vorhergehenden Ansprüche, **dadurch gekennzeichnet, dass** es ferner einen elektrischen Erdleiter (202) mit einem in einer Leiterhülle (208) angeordneten Leiter (206) umfasst, wobei bei Auftreten einer Flüssigkeitsleckage diese Flüssigkeit einen elektrischen Pfad zwischen dem Leiter (106) des Detektionsdrahts (102) und dem elektrischen Erdleiter (202) herstellt.

4. Kabel (400) gemäß einem der vorhergehenden Ansprüche, **dadurch gekennzeichnet, dass** es ferner einen Kontinuitätsdraht (402) für den elektrischen Erdleiter (202) umfasst, wobei der Masse-Kontinuitätsdraht (402)
- mit dem elektrischen Erdleiter (202) am entfernten Ende des elektrischen Erdleiters verbunden ist, und
- zur Verbindung mit einer Detektionseinheit am nahen Ende des elektrischen Erdleiters vorgesehen ist.

5. Kabel (300, 400) zur Detektion und Lokalisierung von Flüssigkeitsleckagen, wobei das Kabel umfasst
- einen Detektionsdraht (102) mit einem Leiter (106), der in einer nichtleitenden Hülle (108) angeordnet ist;
- einen Kontinuitätsdraht (302) für den Detektionsdraht (102), wobei der Kontinuitätsdraht (302)
- am entfernten Ende des Detektionsdrahts mit dem Detektionsdraht (102) verbunden ist, und
- zur Verbindung mit einer Detektionseinheit am nahen Ende des Detektionsdrahts vorgesehen ist; und
- einen nichtleitenden Stützkern (104), umfassend ein zur Aufnahme des Detektionsdrahts (102) ausgebildetes Formelement (112);
**dadurch gekennzeichnet, dass**
- der Leiter (106) exzentrisch in der nichtleitenden Hülle (108) angeordnet ist, so dass ein Teil (114) der Oberfläche des Leiters (106) nicht durch die nichtleitende Hülle (108) abgedeckt ist, und
- der Detektionsdraht (102) in dem Formelement (112) auf dem Stützkern (104) in einer solchen Ausrichtung angeordnet ist, dass der nicht abgedeckte Teil (114) des Leiters (106) flüssigkeitsdurchlässig zwischen dem Stützkern (104) und der nichtleitenden Hülle (108) angeordnet ist;
wobei bei Auftreten einer Flüssigkeitsleckage diese Flüssigkeit einen elektrischen Pfad zwischen dem Leiter (106) und einer elektrischer Masse herstellt.

6. Kabel (400) gemäß Anspruch 5, **dadurch gekennzeichnet, dass** es ferner einen elektrischen Erdleiter (202) mit einem in einer Leiterhülle (208) angeordneten Leiter (206) umfasst, wobei bei Auftreten einer Flüssigkeitsleckage diese Flüssigkeit einen elektrischen Pfad zwischen dem Leiter (106) des Detektionsdrahts (102) und dem elektrischen Erdleiter (202) herstellt.

7. Kabel (400) gemäß einem der Ansprüche 5 oder 6, **dadurch gekennzeichnet, dass** es ferner einen Kontinuitätsdraht (402) für den elektrischen Erdleiter (202) umfasst, wobei der Masse-Kontinuitätsdraht (402)
- mit dem elektrischen Erdleiter (202) am entfernten Ende des elektrischen Erdleiters verbunden ist, und
- zur Verbindung mit einer Detektionseinheit am nahen Ende des elektrischen Erdleiters vorgesehen ist.

8. Kabel gemäß einem der vorhergehenden Ansprüche, **dadurch gekennzeichnet, dass** der Leiter (106) des Detektionsdrahts (102) aus Konstantan besteht.

9. Kabel gemäß einem der Ansprüche 3 oder 6, **dadurch gekennzeichnet, dass** die leitende Hülle (208) des elektrischen Erdleiters (202) ein leitendes Polymer umfasst.

10. Modul (500) zur Detektion von Flüssigkeitsleckagen, umfassend
- wenigstens ein Detektionskabel (100-400) gemäß einem der Ansprüche 1 bis 4, 8 oder 9, und
- eine Detektionseinheit (502) für wenigstens ein Detektionskabel (100-400).

11. Modul (500) zur Detektion und Lokalisierung von Flüssigkeitsleckagen, umfassend
- wenigstens ein Detektions- und Lokalisierungskabel (300, 400) gemäß einem der Ansprüche 5 bis 7, 8 oder 9 und
- eine Detektions- und Lokalisierungseinheit (502) für wenigstens ein Detektions- und Lokalisierungskabel (300, 400) .

12. Anlage (700) zur Detektion von Flüssigkeitsleckagen, umfassend
- eine Hilfs-Recheneinheit (702),
- einen Datenübertragungsbus (704), und
- wenigstens ein Detektionsmodul (500) gemäß Anspruch 10.

13. Anlage (700) zur Detektion und Lokalisierung von Flüssigkeitsleckagen, umfassend
- eine Hilfs-Recheneinheit (702),
- einen Datenübertragungsbus (704), und
- wenigstens ein Detektions- und Lokalisierungsmodul (500) gemäß Anspruch 11.

14. Anlage gemäß einem der Ansprüche 12 oder 13, **dadurch gekennzeichnet, dass** der Datenübertragungsbus innerhalb des nichtleitenden Stützkerns (104) des Detektionskabels oder des Detektions- und Lokalisierungskabel angeordnet ist.

## Revendications

1. Câble (100-400) pour la détection de fuites de liquide conducteur, ledit câble comprenant :
- un fil de détection (102) comprenant un conducteur (106) agencé dans une enveloppe non conductrice (108), et
- une âme de support non conductrice (104) comprenant une forme (112) adaptée pour recevoir ledit fil de détection (102) ;
**caractérisé en ce que** :
- ledit conducteur (106) est agencé de manière décentrée dans ladite enveloppe non conductrice (108) de telle sorte qu'une partie (114) de la surface dudit conducteur (106) ne soit pas couverte par ladite enveloppe non conductrice (108), et
- ledit fil de détection (102) est agencé dans ladite forme (112) sur ladite âme de support (104) dans une orientation telle que ladite partie non couverte (114) dudit conducteur (106) soit disposée entre ladite âme de support (104) et ladite enveloppe non conductrice (108) d'une manière perméable au liquide ;
dans lequel quand une fuite de liquide se produit, ledit liquide forme un chemin électrique entre ledit conducteur (106) et une masse électrique.

2. Câble (300,400) selon la revendication 1, **caractérisé en ce qu'**il comprend également un fil de continuité (302) du fil de détection (102), ledit fil de continuité (302) étant :
- connecté au fil de détection (102) à l'extrémité éloignée dudit fil, et
- destiné à être connecté à une unité de détection à l'extrémité proche dudit fil de détection.

3. Câble (200,400) selon l'une quelconque des revendications précédentes, **caractérisé en ce qu'**il comprend également un fil de mise à la masse électrique (202) comprenant un conducteur (206) agencé dans une enveloppe conductrice (208), dans lequel quand une fuite de liquide se produit, ledit liquide forme un chemin électrique entre le conducteur (106) du fil de détection (102) et le fil de mise à la masse électrique (202).

4. Câble (400) selon l'une quelconque des revendications précédentes, **caractérisé en ce qu'**il comprend également un fil de continuité (402) du fil de mise à la masse électrique (202), ledit fil de continuité de mise à la masse électrique (402) étant :
- connecté au fil de mise à la masse électrique (202) à l'extrémité éloignée dudit fil de mise à la masse électrique, et
- destiné à être connecté à une unité de détection à l'extrémité proche dudit fil de mise à la masse électrique.

5. Câble (300, 400) pour la détection et la localisation de fuites de liquide, ledit câble comprenant :
- un fil de détection (102) comprenant un conducteur (106) agencé dans une enveloppe non conductrice (108) ;
- un fil de continuité (302) dudit fil de détection (102) ledit fil de continuité (302) étant :
- connecté audit fil de détection (102) à l'extrémité éloignée dudit fil de détection, et
- destiné à être connecté à une unité de détection à l'extrémité proche dudit fil de détection ; et
- une âme de support non conductrice (104) comprenant une forme (112) adaptée pour recevoir ledit fil de détection (102) ;
**caractérisé en ce que** :
- ledit conducteur (106) est agencé de manière décentrée dans ladite enveloppe non conductrice (108) de telle sorte qu'une partie (114) de la surface dudit conducteur (106) ne soit pas couverte par ladite enveloppe non conductrice (108), et
- ledit fil de détection (102) est agencé dans ladite forme (112) sur ladite âme de support (104) dans une orientation telle que ladite partie non couverte (114) dudit conducteur (106) soit disposée entre ladite âme de support (104) et ladite enveloppe non conductrice (108) d'une manière perméable au liquide ;
dans lequel quand une fuite de liquide se produit, ledit liquide forme un chemin électrique entre ledit conducteur (106) et une masse électrique.

6. Câble (400) selon la revendication 5, **caractérisé en ce qu'**il comprend également un fil de mise à la masse électrique (202) comprenant un conducteur (206) agencé dans une enveloppe conductrice (208), dans lequel quand une fuite de liquide se produit, ledit liquide forme un chemin électrique entre le conducteur (106) du fil de détection (102) et le fil de mise à la masse électrique (202).

7. Câble (400) selon l'une quelconque des revendications 5 ou 6, **caractérisé en ce qu'**il comprend également un fil de continuité (402) du fil de mise à la masse électrique (202), ledit fil de continuité de mise à la masse électrique (402) étant :
- connecté au fil de mise à la masse électrique (202) à l'extrémité éloignée dudit fil de mise à la masse électrique, et
- destiné à être connecté à une unité de détection à l'extrémité proche dudit fil de mise à la masse électrique.

8. Câble selon l'une quelconque des revendications précédentes, **caractérisé en ce que** le conducteur (106) du fil de détection (102) est réalisé en constantan.

9. Câble selon l'une quelconque des revendications 3 ou 6, **caractérisé en ce que** l'enveloppe conductrice (208) du fil de mise à la masse électrique (202) comprend un polymère conducteur.

10. Module (500) pour la détection de fuites de liquide comprenant :
- au moins un câble de détection (100-400) selon l'une quelconque des revendications 1 à 4, 8 ou 9, et
- une unité de détection (502) pour au moins un câble de détection (100-400).

11. Module 500 pour la détection et la localisation de fuites de liquide comprenant :
- au moins un câble de détection et de localisation (300,400) selon l'une quelconque des revendications 5 à 7, 8 ou 9 et
- une unité de détection et de localisation (502) pour au moins un câble de détection et de localisation (300,400).

12. Installation (700) pour la détection de fuites de liquide comprenant :
- une unité de traitement de support (702),
- un bus de transmission de données (704), et
- au moins un module de détection (500) selon la revendication 10.

13. Installation (700) pour la détection et la localisation de fuites de liquide comprenant :
- une unité de traitement de support (702),
- un bus de transmission de données (704), et
- au moins un module de détection et de localisation (500) selon la revendication 11.

14. Installation selon l'une quelconque des revendications 12 ou 13, **caractérisé en ce que** le bus de transmission de données est agencé à l'intérieur de l'âme de support non conductrice (104) du câble de détection ou du câble de détection et de localisation.
